Europäisches Patentamt

European Patent Office

Office européen des brevets

(19)

(11) **EP 0 967 824 A2**

(12) **EUROPÄISCHE PATENTANMELDUNG**

(43) Veröffentlichungstag:
29.12.1999 Patentblatt 1999/52

(51) Int. Cl.⁶: **H04Q 11/04**

(21) Anmeldenummer: 99112359.7

(22) Anmeldetag: 25.06.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.06.1998 DE 19828654**

(71) Anmelder:
**SIEMENS AKTIENGESELLSCHAFT**
**80333 München (DE)**

(72) Erfinder:
• **Leutner, Klaus**
  **82008 Unterhaching (DE)**
• **Nagler, Werner**
  **82069 Hohenschäftlarn (DE)**

(54) **Empfängereinheiten, Vermittlungsstelle und Verfahren zum Erfassen von im Sprachkanal übertragenen vermittlungstechnischen Steuersignalen**

(57) Erläutert wird eine Empfängereinheit (12) zum Empfangen vermittlungstechnischer Steuersignale. Während der Verbindung von einem ersten Teilnehmer (Tln1) zu einem zweiten Teilnehmer (Tln2) werden in einem Übertragungskanal (Ü1) Steuersignale (ST) erzeugt. Diese Steuersignale (ST) werden von einem Störsignal (S1') überlagert. Eine adaptive Filtereinheit (F1) unterdrückt die Störsignale (S1') unter Verwendung der in einem weiteren Übertragungskanal (Ü2) übertragenen Signale (S1). Ein gefiltertes Steuersignal (ST') wird dann in einem Zeichenempfänger (ZE1) erfaßt.

Fig. 1

EP 0 967 824 A2

**Beschreibung**

Die Erfindung betrifft eine Empfängereinheit zum Erfassen vermittlungstechnischer Steuersignale, mit einem ersten als Übertragungsstrecke verwendeten Übertragungskanal zur Signalübertragung von einem ersten Teilnehmer zu einem zweiten Teilnehmer und zum Übertragen von vermittlungstechnischen Steuersignalen, die vom ersten Teilnehmer während der Verbindung zum zweiten Teilnehmer erzeugt werden. Außerdem gibt es in der Vermittlungsstelle einen weiteren Übertragungskanal für die Signalübertragung vom zweiten Teilnehmer zum ersten Teilnehmer. Die Steuersignale werden in der Vermittlungsstelle mit einem Zeichenempfänger erfaßt. Außerdem betrifft die Erfindung gemäß Anspruch 2 eine Empfängereinheit, bei der an die Stelle des zweiten Teilnehmers eine automatische Ansageeinheit und die Empfängereinheit selbst tritt. Die oben genannten technischen Wirkungen gelten auch für die Empfängereinheit gemäß Anspruch 2.

In den USA eingesetzte Vermittlungsstellen zum Erfassen von im Sprachkanal übertragenen Steuersignalen können lange Tastwahlzeichen erfassen. Diese Tastwahlzeichen müssen mindesten eine bis zwei Sekunden dauern, damit sie sicher erfaßt werden. In der bekannten Vermittlungsstelle können nur vom sogenannten A-Teilnehmer Steuersignale erzeugt werden, der durch Wählen der Telefonnummer den Verbindungsaufbau veranlaßt. Die bekannte Vermittlungsstelle überwacht deshalb nur den Übertragungskanal vom A-Teilnehmer zum B-Teilnehmer. Sobald das Steuersignal erfaßt wird, wird die Übertragungsstrecke vom B-Teilnehmer zum A-Teilnehmer unterbrochen, um Störungen von der Seite des B-Teilnehmers beim Erfassen des Steuersignals zu vermeiden. In einem weiteren Schritt wird ein Filter zugeschaltet, der ein Fehlersignal abgibt, wenn neben einem im Steuersignal enthaltenen Sinussignal für das Tastwahlzeichen noch andere Frequenzen übertragen werden. An Hand des Fehlersignals können Steuersignale von Sprachsignalen unterschieden werden. Das in der bekannten Vermittlungsstelle eingesetzte Verfahren kann nicht verwendet werden, wenn die Tastwahlzei-chen nur kurz sind, beispielsweise kürzer als 100 ms. Solche kurzen Steuersignale werden nicht sicher erkannt.

Zur Signalisierung lassen sich Mehrfrequenz-Tonsignale einsetzen. Dabei ist jedes Zeichen durch die Überlagerung zweier Töne aus zwei verschiedenen Tongruppen definiert. Die Verwendung von Mehrfrequenz-Tonsignalen in Vermittlungsstellen wird erläutert in "Technical Features of push-Button-Telephonsets", ITU-T Recommandation Q.23, Blue Book, und "Multifrequency Push-Button Signal Reception", ITU-T Recommandation Q.24, Blue Book. Die mit Hilfe der Mehrfrequenz-Tonsignale erzeugten Steuersignale haben eine Signaldauer größer 40 ms, typischerweise zwischen 50 und 70 ms.

Es ist Aufgabe der Erfindung eine einfach aufgebaute Empfängereinheit anzugeben, die auch kurze Steuersignale fehlerfrei erkennt.

Diese Aufgabe wird durch eine Empfängereinheit mit den im Patentanspruch 1 angegebenen Merkmalen erfüllt. Weiterbildungen dieser Empfängereinheit sind in den Unteransprüchen angegeben.

Die Erfindung geht von der Überlegung aus, daß kurze Steuersignale nur dann sicher erfaßt werden können, wenn der Übertragungskanal vom B-Teilnehmer zum A-Teilnehmer nicht aufgetrennt wird. Jedoch sind dann Störsignale vom B-Teilnehmer, die beispielsweise über die Gabelschaltung bzw. durch Übersprechen die Steuersignale überlagern, auf andere Art und Weise zu beseitigen. Deshalb wird in der erfindungsgemäßen Vermittlungsstelle eine adaptive Filtereinheit zum Unterdrücken eines die Steuersignale überlagernden Störsignals unter Verwendung der im weiteren Übertragungskanal übertragenen Signale verwendet. Die Störsignale lassen sich bereits auf ihrem Weg vom B-Teilnehmer zum A-Teilnehmer erfassen und können zur Beseitigung ihres Einflusses auf die Steuersignale in der adaptiven Filtereinheit verwendet werden. Die adaptive Filtereinheit paßt ihr Filterverhalten aufgrund einer vorgegebenen Optimierungsstrategie an das Übertragungssignal im Übertragungskanal vom B-Teilnehmer zum A-Teilnehmer an. Das Störsignal, welches das Steuersignal überlagert, ist dem Übertragungssignal im Übertragungskanal vom B-Teilnehmer zum A-Teilnehmer ähnlich, weil es aus diesem Signal durch Dämpfung und Verzögerung entsteht. Durch den Einsatz der adaptiven Filtereinheit lassen sich auch kurze Steuersignale fehlerfrei erkennen. Der schaltungstechnische Aufwand für das Unterbrechen des Übertragungskanals entfällt gegenüber dem Verfahren in der bekannten Vermittlungsstelle.

In einer Weiterbildung wird eine Umschalteinheit verwendet, die abhängig davon, welcher Teilnehmer den Verbindungsaufbau veranlaßt hat, vor dem Schalten der Verbindung die Übertragungskanäle mit der Filtereinheit verbindet. Durch diese Maßnahme kann dieselbe Filtereinheit verwendet werden, wenn der erste Teilnehmer der A-Teilnehmer oder wenn der zweite Teilnehmer der A-Teilnehmer ist. In einer anderen Weiterbildung werden mehrere Filtereinheiten verwendet. Eine Steuereinheit wählt vor dem Verbindungsaufbau eine aktuell nicht verwendete Filtereinheit aus und verbindet sie mit den Übertragungskanälen. Beispielsweise werden bei 120 Übertragungskanälen durch diese Maßnahme nur etwa 60 Filtereinheiten benötigt.

Die Erfindung betrifft auch eine Vermittlungsstelle gemäß Anspruch 10, in der eine der erfindungsgemäßen Empfängereinheiten eingebaut ist.

Die Erfindung betrifft außerdem in den Ansprüchen 11 und 12 Verfahren zum Betreiben von Empfängereinheiten für vermittlungstechnische Steuersignale. Die oben genannten technischen Wirkungen der erfindungsgemäßen Vermittlungsstelle gelten auch für die erfindungsgemäßen Verfahren.

In einer Weiterbildung der erfindungsgemäßen Verfahren wird in der adaptiven Filtereinheit ein rekursiver Filter verwendet, uni eine schnelle Berechnung der Filterkoeffizienten zu erzielen. Die erfindungsgemäßen Verfahren werden nicht nur in digitalisierten Analognetzen sondern auch in ISDN-Netzen (Integrated Services Digital Network) und in sogenannten in-telligenten Netzen (IN-Netz) eingesetzt, die eigentlich andere Möglichkeiten zur Signalisierung bieten. Werden jedoch alternativ oder zusätzlich auch im Sprachkanal Steuersignale übertragen, so kann dem Teilnehmer unabhängig vom verwendeten Telekommunikationsnetz eine einheitliche Benutzerschnittstelle angeboten werden. In jedem Netz braucht der Teilnehmer dann nur während des Gesprächs die vorgegebenen Tasten zu drücken.

Im folgenden werden Ausführungsbeispiele der Erfindung an Hand der beiliegenden Zeichnungen erläutert. Darin zeigen:

Figur 1    einen Ausschnitt eines Telekommunikationsnetzes, und

Figur 2    das Prinzip einer Umschalteinheit zum Anschluß eines Zeichenempfängers an Übertragungskanäle.

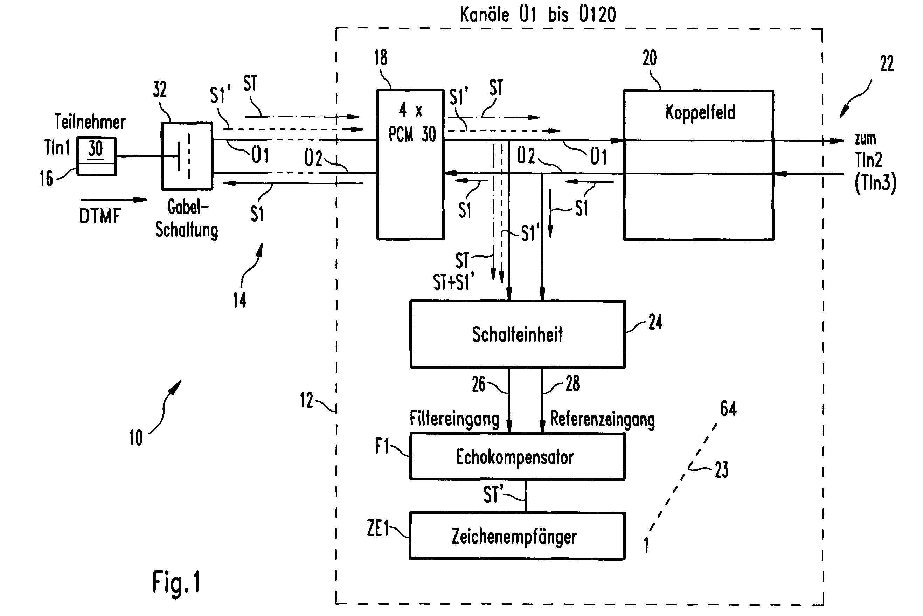

Figur 1 zeigt einen Ausschnitt aus einem Telekommunikations-netz 10, kurz Tk-Netz genannt. Das Tk-Netz 10 enthält in ei-ner Vermittlungsstelle eine Anschlußeinheit 12, an die gegebenenfalls unter Einbeziehung weiterer Vermittlungsstellen mittels einer Übertragungsleitung 14 der Fernsprechapparat 16 eines Teilnehmers Tln1 angeschlossen ist.

Die Anschlußeinheit 12 enthält zum Anschluß der Übertragungsleitung 14 eine PCM-Einheit 18, die vier PCM30-Einheiten (Puls Code Modulation) enthält. Somit ermöglicht die PCM-Einheit 18 Gespräche auf 120 Übertragungskanälen Ü1 bis Ü120. Für die Verbindung vom Teilnehmer Tln1 zu einem Teilnehmer Tln2 wird der Übertragungskanal Ü1 verwendet. Die Verbindung vom Teilnehmer Tln2 zum Teilnehmer Tln1 wird über einen Übertragungskanal Ü2 realisiert. Der Übertragungskanal Ü1 wird von der PCM-Einheit 18 über ein Koppelfeld 20 auf eine Verbindungsleitung 22 geschaltet, die unter Einbeziehung weiterer nicht dargestellter Vermittlungsstellen zum Teilnehmer Tln2 führt. Der Übertragungskanal Ü2 auf der Verbindungsleitung 22 wird durch das Koppelfeld 20 mit der PCM-Einheit 18 verbunden.

Außerdem enthält die Vermittlungsstelle 12 vierundsechzig Filtereinheiten F1 bis F64, denen jeweils ein Zeichenempfänger ZE1 bis ZE64 zugeordnet ist. In Figur 1 ist nur die Filtereinheit F1 und ihr zugehöriger Zeichenempfänger ZE1 dargestellt, während die weiteren Filtereinheiten F2 bis F64 und Zeichenempfänger ZE2 bis ZE64 durch eine Strichlinie 23 angedeutet sind. Die Eingänge der Filtereinheiten F1 bis F64 wer-den durch eine Schalteinheit 24 wahlweise mit einem der Übertragungskanäle Ü1 bis Ü120 verbunden. Im Ausführungsbeispiel verbindet die Schalteinheit 24 den Übertragungskanal Ü1 mit einem Filtereingang 26 der Filtereinheit F1. Der Übertragungskanal Ü2 wird durch die Schalteinheit 24 mit einem Referenzeingang 28 der Filtereinheit F1 verbunden.

Der Fernsprechapparat 16 des Teilnehmers Tln1 hat ein zum Wählen verwendetes Tastenfeld 30, mit dem der Teilnehmer Tln1 während des Gesprächs mit dem Teilnehmer Tln2 Tastzeichen an die Vermittlungsstelle 12 sendet, um beispielsweise einen dritten Teilnehmer Tln3 mit in das Gespräch einzubeziehen. Diese Art der Signalisierung wird auch als Doppelton-Selektivruf (DTMF - Dual Tone Multifrequency) bezeichnet. Beim Tastendruck durch den Teilnehmer Tln1 wird ein Signalton ST erzeugt, der zwei überlagerte Sinustöne vorgegebener Frequenz enthält. Spricht der Teilnehmer Tln2 während der Teilnehmer Tln1 den Signalton ST erzeugt, so wirkt das Sprachsignal S1 des Teilnehmers Tln2 als Störsignal, weil es dem Signalton ST überlagert wird. Die Überlagerung wird beispielsweise durch die endliche Dämpfung einer sogenannten Gabelschaltung 32 erzeugt, mit der von einer zweidrahtigen Leitung auf der Seite des Teilnehmers Tln1 auf eine vierdrahtige Leitung auf der Seite der Vermittlungsstelle 12 übergegangen wird. In der Gabelschaltung 32 wird das im Übertragungskanal Ü2 übertragene Störsignal S1 gedämpft und gelangt in den Übertragungskanal Ü1. Es entsteht im Übertragungskanal Ü1 letztlich ein Störsignal S1', das gegenüber dem Startsignal S1 durch die zweimalige Übertragung über die Übertragungsleitung 14 verzögert ist und das sich dem Signalton ST überlagert.

Der durch das Störsignal S1' überlagerte Signalton ST gelangt über die Schalteinheit 24 an den Filtereingang 26 der Filtereinheit F1. Bei einer direkten Auswertung des durch das Störsignal S1' überlagerten Signaltons ST durch den Zeichenempfänger ZE1 ware eine fehlerfreie Erkennung des Signaltons ST nicht möglich. Deshalb wird in der Filtereinheit F1 das Störsignal S1' weitgehend unterdrückt. Dies ist möglich, weil die Filtereinheit F1 an ihrem Referenzeingang 28 das Störsignal S1 zur Filterung verwendet.

Zwischen den Störsignalen S1' und S1 besteht ein starker Zusammenhang, weil das Störsignal S1' durch Dämpfung und zeitliche Verzögerung des Störsignals S1 entsteht. Zwischen dem Signalton ST und den Störsignalen S1' bzw. S1 besteht dagegen kein Zusammenhang. Bei der Filterung in der Filtereinheit F1 werden diese Tatsachen ausgenutzt, um die Überlagerung des Signaltons ST durch das Störsignal S1' zu beseitigen. Die Filtereinheit F1 wird auch als adaptive Filtereinheit bezeichnet, da die Filterkoeffizienten abhängig vom aktuellen Störsignal S1 am Referenzeingang 28 verändert werden. Der verbleibende Fehler E nach der Filterung in der Filtereinheit F1 wird beispielsweise wie

folgt definiert:

$$E = ST + S1' - S1.$$

Die Filterkoeffizienten werden dann so berechnet, daß der Mittelwert des Quadrats aus dem Fehler E möglichst klein ist.

Am Ausgang der Filtereinheit F1 wird ein Signalton ST' ausgegeben, der im wesentlichen dem Signalton ST entspricht. Der Signalton ST1 wird im Zeichenempfänger ZE1 ausgewertet. Anschließend meldet Zeichenempfänger ZE1 dann einer nicht dargestellten Steuerung, daß der Teilnehmer Tln1 den Signalton ST' erzeugt hat. Die Steuerung veranlaßt dann die Auswertung des Signaltons ST', so daß letztlich der Teilnehmer Tln3 mit in das Gespräch einbezogen wird.

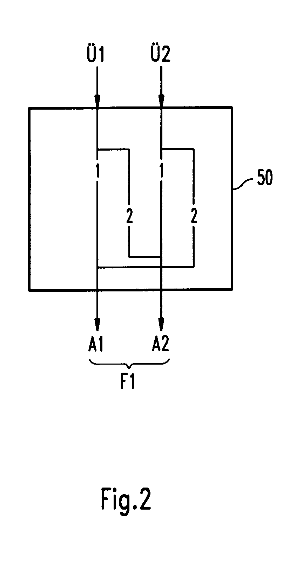

Figur 2 zeigt das Prinzip einer in der Schalteinheit 24 enthaltenen Umschalteinheit 50 zum Verbinden von Anschlüssen A1, A2 der Filtereinheit F1 mit übertragungskanälen Ü1, Ü2. In einem Betriebszustand I verbindet die Umschalteinheit 50 den Übertragungskanal Ü1 mit dem Anschluß A1, der als Filtereingang arbeitet. Im Betriebszustand I wird durch die Umschalteinheit 50 weiterhin der Übertragungskanal Ü2 mit dem Anschluß A2 verbunden, der als Referenzeingang arbeitet. Somit kann im Betriebszustand I der auf dem Übertragungskanal Ü1 sprechende Teilnehmer Tastzeichen senden.

In einem Betriebszustand II verbindet die Umschalteinheit 50 dagegen den Übertragungskanal Ü1 mit dem Anschluß A2 und den Übertragungskanal Ü2 mit dem Anschluß A1. Somit kann der auf dem Übertragungskanal Ü2 sprechende Teilnehmer Tastzeichen erzeugen.

Die Umschalteinheit 50 führt letztlich mit den auf den Übertragungskanälen Ü1 und Ü2 übertragenen digitalen Daten Kopiervorgänge in einem Speicher durch. Die Betriebszustände I und II unterscheiden sich dadurch, daß die Zieladressen für die Daten des Übertragungskanals Ü1 bzw.Ü2 vertauscht werden.

**Patentansprüche**

1. Empfängereinheit (12) zum Empfangen vermittlungstechnischer Steuersignale ,

   mit einer ersten Übertragungsstrecke (Ü1) zur Signalübertragung von einem ersten Teilnehmer (Tln1) zu einem zweiten Teilnehmer (Tln2) und zum Übertragen von vermittlungstechnischen Steuersignalen (ST), die vom ersten Teilnehmer (Tln1) während der Verbindung zum zweiten Teilnehmer (Tln2) erzeugt werden,
   einer weiteren Übertragungsstrecke (Ü2) für die Signalübertragung vom zweiten Teilnehmer (Tln2) zum ersten Teilnehmer (Tln1),
   und mit einem Zeichenempfänger (ZE1) zum Erfassen der Steuersignale (ST),
   **gekennzeichnet durch** eine adaptive Filtereinheit (F1) zum Unterdrücken eines die Steuersignale (ST) überlagernden Störsignals (S1') unter Verwendung der über die weitere Übertragungsstrecke (Ü2) übertragenen Signale (S1).

2. Empfängereinheit (12) zum Empfangen vermittlungstechnischer Steuersignale,

   mit einer ersten Übertragungsstrecke (Ü1) zum Übertragen von vermittlungstechnischen Steuersignalen (ST), die von einem ersten Teilnehmer (Tln1) während der Verbindung zu einer automatischen Ansageeinheit und zur Empfängereinheit (12) erzeugt werden,
   einer weiteren Übertragungsstrecke (Ü2) für die Signalübertragung von der Ansageeinheit zum ersten Teilnehmer (Tln1), einem Zeichenempfänger (ZE1) zum Erfassen der Steuersignale (ST),
   und mit einer adaptiven Filtereinheit (F1) zum Unterdrücken eines die Steuersignale (ST) überlagernden Störsignals (S1') unter Verwendung der über die weitere Übertragungsstrecke (Ü2) übertragenen Signale (S1).

3. Empfängereinheit (12) nach einem der vorhergehenden Ansprüche, **dadurch gekennzeichnet**, daß ein Filtereingang (26) der Filtereinheit (F1) mit der ersten Übertragungsstrecke (Ü1) verbunden ist,

   daß ein Referenzeingang (28) der Filtereinheit (F1) mit der weiteren Übertragungsstrecke (Ü2) verbunden ist,
   daß der Ausgang der Filtereinheit (F1) mit dem Zeichenempfänger (ZE1) verbunden ist,
   und daß die Filtereinheit (F1) ein den Steuersignalen (ST) überlagertes Echosignal (S1') mittels eines das Echosignal (S1') hervorrufenden Übertragungssignals (S1) auf der weiteren Übertragungsstrecke (Ü2) unterdrückt.

4. Empfängereinheit nach Anspruch 3, **dadurch gekennzeichnet**, daß die erste Übertragungsstrecke (Ü1) zum zweiten Teilnehmer (Tln2) und zum Zeichenempfänger (ZE1) hin sowie der zweite übertragungskanal (Ü2) zum ersten Teilnehmer (Tln1) und zum Zeichenempfänger (ZE1) hin verzweigt.

5. Empfängereinheit (12) nach einem der vorhergehenden Ansprüche, **gekennzeichnet durch** eine Schalteinheit (24), die vor dem Aufbau der Verbindung die übertragungskanäle (Ü1, Ü2) mit den Eingängen der Filtereinheit (F1) zuordnet.

6. Empfängereinheit (12) nach Anspruch 5, **dadurch gekennzeichnet**, daß die Schalteinheit (24, 50) beim Zuordnen berücksichtigt, welcher Teilnehmer (Tln1, Tln2) den Verbindungsaufbau veranlaßt hat.

7. Empfängereinheit (12) nach Anspruch 5 oder 6, **gekennzeichnet durch** mehrere Filtereinheiten (F1 bis F64), denen jeweils ein Zeichenempfänger (ZE1 bis ZE64) zugeordnet ist,

   und dadurch, daß die Schalteinheit (24) vor Verbindungsaufbau eine aktuell nicht verwendete Filtereinheit auswählt und mit den Übertragungskanälen (Ü1, Ü2) verbindet.

8. Empfängereinheit (12) nach Anspruch 7, **dadurch gekennzeichnet**, daß die Schalteinheit (24) die Filtereinheit (F1) aus einer vorgegebenen Zahl von Filtereinheiten (F1 bis F64) auswählt, wobei die Zahl der Filtereinheiten (F1 bis F64) etwa durch zwei geteilten Zahl von Übertragungskanälen entspricht, die durch die Schalteinheit (24) mit den Filtereinheiten (F1 bis F64) verbunden werden können.

9. Empfängereinheit nach einem der vorhergehenden Ansprüche, **dadurch gekennzeichnet**, daß die Filtereinheit (F1) und der Zeichenempfänger (ZE1) während der gesamten Dauer der Verbindung den beiden Übertragungskanälen (Ü1, Ü2) zugeordnet sind.

10. Vermittlungsstelle, **gekennzeichnet durch** eine Empfängereinheit (12) nach einem der vorhergehenden Ansprüche.

11. Verfahren zum Betreiben einer Empfängereinheit für vermittlungstechnische Steuersignale, insbesondere zum Betreiben einer Empfängereinheit (12) nach einem der Ansprüche 1 bis 9, bei dem eine erste Übertragungsstrecke (Ü1) Übertragungssignale von einem ersten Teilnehmer (Tln1) zu einem zweiten Teilnehmer (Tln2) überträgt,

   während der Verbindung auf der ersten Übertragungsstrecke (Ü1) außerdem vom ersten Teilnehmer (Tln1) erzeugte vermittlungstechnische Steuersignale (ST) übertragen werden, eine weitere Übertragungsstrecke (Ü2) Übertragungssignale vom zweiten Teilnehmer (Tln2) zum ersten Teilnehmer (Tln1) überträgt, eine adaptive Filtereinheit (F1) ein den Steuersignalen (ST) überlagertes Störsignal (S1') unter Verwendung der über die weitere Übertragungsstrecke (Ü2) übertragenen Übertragungssignale (S1) unterdrückt, und bei dem ein Zeichenempfänger (ZE1) die gefilterten Steuersignale (ST') erfaßt und an die Steuereinheit einer Vermittlungsstelle weiterleitet.

12. verfahren zum Betreiben einer Empfängereinheit für vermittlungstechnische Steuersignale, insbesondere zum Betreiben einer Empfängereinheit (12) nach einem der Ansprüche 1 bis 9, bei dem eine erste Übertragungsstrecke (Ü1) Steuersignale (ST) von einem ersten Teilnehmer (Tln1) zu einer Filtereinheit (F1) überträgt,

   eine weitere Übertragungsstrecke (Ü2) Übertragungssignale von einer automatischen Ansageeinheit zum ersten Teilnehmer (Tln1) überträgt, die Filtereinheit (F1) adaptiv ein den Steuersignalen (ST) überlagertes Störsignal (S1') unter Verwendung der über die weitere Übertragungsstrecke (Ü2) übertragenen Übertragungssignale (S1) unterdrückt, und bei dem ein Zeichenempfänger (ZE1) die gefilterten Steuersignale (ST') erfaßt und an die Steuereinheit einer Vermittlungsstelle weiterleitet.

13. Verfahren nach Anspruch 11 oder 12, **dadurch gekennzeichnet**, daß die adaptive Filtereinheit (F1) eine Echokompensation durchführt, bei der ein im Störsignal (S1') enthaltenes Echosignal des im weiteren Übertragungskanal (Ü2) übertragenen Übertragungssignals (S1) unterdrückt wird.

14. Verfahren nach einem der Ansprüche 11 bis 13, **dadurch gekennzeichnet**, daß in der adaptiven Filtereinheit (F1) ein rekursiver Filter, vorzugsweise ein Kalmanfilter verwendet wird.

15. Verfahren nach einem der Ansprüche 11 bis 14, **dadurch gekennzeichnet**, daß der Verbindungsaufbau von der Seite des ersten Teilnehmers (Tln1) her oder von der Seite des zweiten Teilnehmers (Tln2) her veranlaßt wird.

16. Verfahren nach einem der Ansprüche 11 bis 15, **dadurch gekennzeichnet**, daß es in einem digitalisierten Analognetz, einem ISDN-Netz und/oder in einem IN-Netz eingesetzt wird.

Fig.1

Fig.2